# DEMANDE DE BREVET EUROPEEN

(11) **EP 1 376 081 A1**
(43) Date de publication de la demande: **02.01.2004**
(21) Numéro de dépôt: 03364008.7
(22) Date de dépôt: 17.06.2003
(51) Int. Cl.: G01K 1/14

(54) **Thermomètre vertical pour baignoire**

(30) Priorité: 17.06.2002 FR 0207455
(71) Demandeur: AMPAFRANCE S.A., 49309 Cholet (FR)
(72) Inventeur: Parrin, Guillaume, 49300 Cholet (FR)
(74) Mandataire: Vidon, Patrice

(57) **Abrégé**

Le domaine de l'invention est celui de la puériculture.

L'invention a pour objet un thermomètre pour baignoire comprenant, dans un corps monobloc (1), des moyens de mesure (2) de la température de l'eau et des moyens de visualisation (3) d'une information représentative de ladite température, ledit corps (1) étant conçu de façon à tenir sensiblement verticalement, posé sur le fond de ladite baignoire, lesdits moyens de mesure (2) relevant la température au voisinage dudit fond, et lesdits moyens de visualisation (3) étant placés à l'autre extrémité dudit corps (1), de façon qu'ils se trouvent au voisinage de la surface de l'eau et/ou hors de l'eau, lorsque ladite baignoire est remplie sensiblement jusqu'à un niveau d'eau prédéterminé suffisant pour donner le bain à un enfant

## Description

Le domaine de l'invention est celui de la puériculture. Plus précisément, l'invention concerne les thermomètres de bain destiné en particulier à contrôler la température de l'eau contenue dans une baignoire, pour le bain de nouveau-nés ou d'enfants en bas âge.

On sait que l'eau du bain donné aux nouveau-nés ou aux enfants en bas âge doit présenter une température avoisinant celle du corps, c'est-à-dire environ 37°C. Il est donc nécessaire de contrôler précisément cette température, avant et/ou pendant le bain.

Certaines personnes évaluent la température de l'eau en plongeant simplement la main ou le coude dans l'eau. Cette méthode est évidemment empirique et approximative.

Généralement, on a recours à un thermomètre de bain pour mesurer la température de l'eau et s'assurer que celle-ci est adaptée au nouveau-né ou à l'enfant (en terme de sécurité, de santé et de confort).

Classiquement, ces thermomètres sont intégrés dans un corps flottant qui porte des graduations de température le long desquelles se déplace un liquide coloré contenu dans un tube. De par leur capacité à flotter, ces thermomètres permettent de réaliser aisément une lecture de la température à la surface de l'eau.

Un inconvénient majeur de cette technique est que la température affichée et lue est celle, justement, de la surface de l'eau. Cette température peut alors être sensiblement différente (plus froide) de celle qui règne à mi-profondeur ou au fond de la baignoire.

En conséquence, si l'on se fie à cette information, l'enfant sera plongé dans une eau dont la température n'est pas idéale pour lui.

Bien entendu, il est possible de manipuler le thermomètre de façon à l'immerger et à mesurer la température de l'eau à mi-profondeur ou au fond de la baignoire. Toutefois, cette manoeuvre est peu aisée, puisque l'on doit simultanément apporter des soins à l'enfant, et qu'il faut attendre un certain temps pour que la mesure se stabilise. En outre, la lecture de la température sur le thermomètre immergé devient mal aisée, et ceci d'autant plus lorsque de la mousse repose à la surface de l'eau.

En tout état de cause, selon cette approche, il n'est pas possible de suivre en permanence la température de l'eau, pour détecter par exemple lorsque celle-ci devient trop froide, en cours de bain.

Il n'y a donc pas, à l'heure actuelle, de dispositifs permettant de mesurer et de suivre efficacement et aisément la température de l'eau du bain d'un enfant.

L'invention a notamment pour objectif de pallier ces inconvénients de l'art antérieur.

Plus précisément, l'invention a pour objectif de proposer un thermomètre pour baignoire qui permette une mesure fiable et efficace de la température de l'eau à mi-profondeur ou au fond de l'eau. Un autre objectif de l'invention est de fournir un tel thermomètre permettant une lecture de la température facile et sans manipulation.

L'invention a également pour objectif de fournir un tel thermomètre qui soit simple d'utilisation et facile à mettre en oeuvre. En ce sens, l'invention a notamment pour objectif de permettre l'installation du thermomètre dans la baignoire tant lorsque celle-ci est remplie d'eau que lorsqu'elle est vide.

L'invention a aussi pour objectif de fournir un tel thermomètre qui puisse, en complément de l'affichage de la température mesurée, alerter une personne responsable du bain de l'enfant lorsque la température de l'eau est différente de celle souhaitée.

Un autre objectif de l'invention est de fournir un tel thermomètre qui puisse être conçu et réalisé avec des formes nouvelles et attractives.

Ces objectifs, ainsi que d'autres qui apparaîtront par la suite sont atteints grâce à l'invention qui a pour objet un thermomètre pour baignoire comprenant, dans un corps monobloc, des moyens de mesure de la température de l'eau et des moyens de visualisation d'une information représentative de ladite température, ledit corps étant conçu de façon à tenir sensiblement verticalement, posé sur le fond de ladite baignoire, lesdits moyens de mesure relevant la température au voisinage dudit fond, et lesdits moyens de visualisation étant placés à l'autre extrémité dudit corps, de façon qu'ils se trouvent au voisinage de la surface de l'eau et/ou hors de l'eau, lorsque la baignoire est remplie sensiblement jusqu'à un niveau d'eau suffisant pour donner le bain à un enfant.

On obtient ainsi un thermomètre de bain particulièrement avantageux en ce qu'il combine les avantages d'une mesure de la température de l'eau en profondeur, c'est-à-dire telle qu'elle sera ressentie par l'enfant, et d'une lecture aisée à la surface de l'eau ou à son voisinage (en fonction du niveau d'eau), de la température mesurée.

L'invention apporte donc une solution efficace, par rapport aux thermomètres de bain traditionnels prévus pour lire à la surface de l'eau, une température (qui n'est alors pas celle ressentie par l'enfant lorsqu'il est plongé dans la baignoire du fait du gradient de température existant entre la surface de l'eau et le fond de la baignoire).

Le thermomètre selon l'invention est donc d'une grande praticité, et combine fiabilité et confort d'utilisation.

Selon une solution préférée, le thermomètre comprend des moyens pour le solidariser de façon réversible audit fond de la baignoire. Il peut notamment s'agir d'une ventouse.

Ainsi, le thermomètre peut facilement être mis en place dans la baignoire, puis retiré de celle-ci.

Il est généralement recommandé de mettre en place un tel thermomètre dans une baignoire remplie (jusqu'au niveau souhaité), ou presque remplie. On peut également l'installer dans une baignoire vide, pour de contrôler la température de l'eau au fur et à mesure du remplissage de la baignoire, de façon à corriger éventuellement le mélange eau chaude-eau froide. Dans ce dernier cas notamment, mais plus généralement dans toutes les situations, il convient cependant de prendre en compte le temps d'adaptation classique des thermomètres aux variations de température.

Préférentiellement, lesdits moyens de visualisation comprennent un afficheur numérique.

Avantageusement, lesdits moyens de visualisation peuvent comprendre au moins une diode luminescente.

À l'aide d'une telle diode, on peut utiliser un code couleur de type "feu vert" ou "feu rouge" procurant une indication complémentaire de la température affichée.

Préférentiellement, le thermomètre comprend des moyens de sécurité, délivrant au moins une information d'alarme lorsque la température mesurée est inférieure et/ou supérieure à au moins une valeur de température prédéterminée.

Dans ce cas, ladite information est avantageusement un signal sonore et/ou un signal lumineux.

On obtient ainsi un thermomètre interactif, alertant l'utilisateur et l'incitant à vérifier puis modifier la température de l'eau.

Selon une solution avantageuse, lesdits moyens de visualisation sont recouverts par une lentille de protection, qui peut en outre former loupe pour permettre une lecture aisée même lorsque le thermomètre est mouillé ou légèrement recouvert d'eau.

Préférentiellement, ledit thermomètre est conçu de façon à pouvoir flotter (lorsqu'il n'est pas solidarisé au fond de la baignoire). Dans ce cas, il est préférentiellement lesté de façon à prendre ladite position sensiblement verticale, lorsqu'il flotte.

Avantageusement, le thermomètre porte par ailleurs au moins une graduation permettant de mesurer le niveau d'eau.

On peut de cette façon relever facilement le niveau d'eau dans lequel l'enfant est le plus à l'aise et/ou le plus en sécurité (classiquement de l'ordre de 8 centimètres).

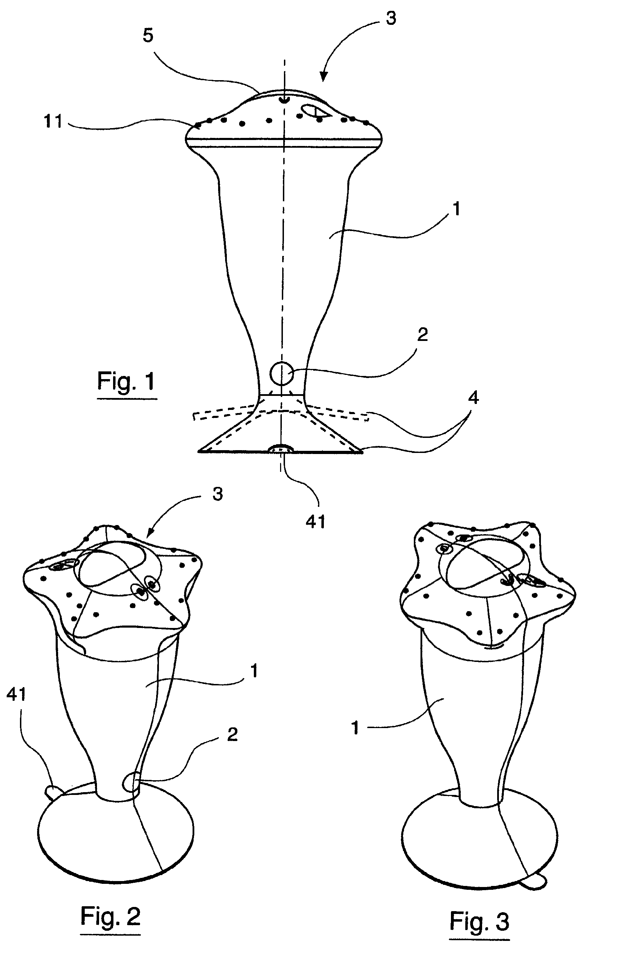

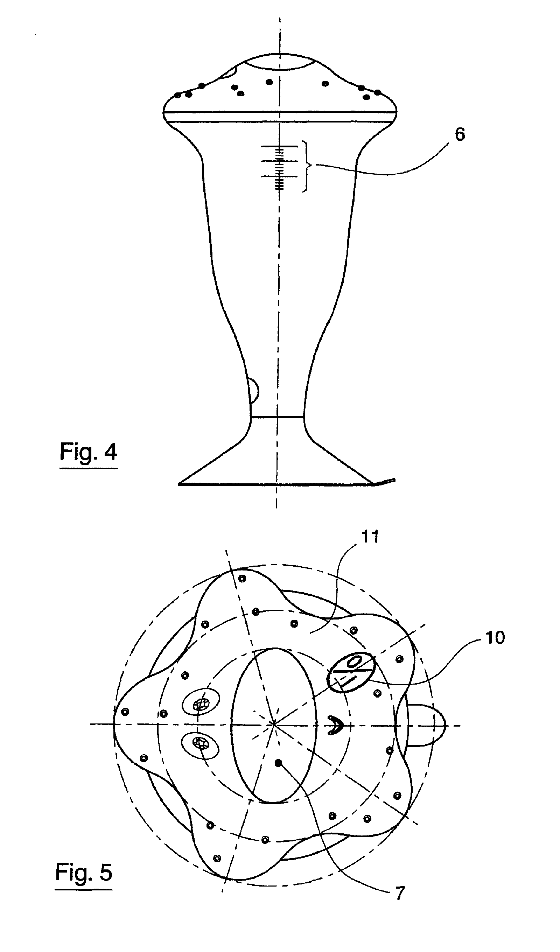

D'autres caractéristiques et avantages de l'invention apparaîtront plus clairement à la lecture de la description d'un mode de réalisation préférentiel de l'invention, donné à titre d'exemple illustratif et non limitatif, et des dessins annexés parmi lesquels:
■ la figure 1 est une vue de côté du thermomètre selon l'invention ;
■ les figures 2 et 3 sont deux vues en perspective du thermomètre selon l'invention ;
■ la figure 4 est une vue de côté du thermomètre selon l'invention, tourné d'un quart de tour par rapport à la position illustrée par la figure 1 ;
■ la figure 5 est une vue de dessus du thermomètre selon l'invention.

Comme indiqué précédemment, l'invention apporte une solution particulièrement efficace dont le principe est de proposer un thermomètre destiné à s'étendre de façon sensiblement verticale dans une baignoire de façon à mesurer la température de l'eau en profondeur tandis que l'affichage de la mesure est proposé à la surface de l'eau ou au voisinage de celle-ci.

En référence aux figures 1 à 3, le thermomètre selon l'invention comprend un corps monobloc 1 conçu de façon à tenir en station debout, c'est-à-dire de façon sensiblement verticale, posé sur le fond d'une baignoire.

À la base du corps 1 ou au voisinage de celle-ci, sont intégrés des moyens de mesure 2 de la température de l'eau. Il s'agit par exemple d'un capteur de température produisant un courant et/ou une tension électrique variable en fonction de la température. Des moyens de traitement électriques et/ou électroniques (non représentés) transforment classiquement cette mesure en une donnée numérique, par exemple en degrés.

On comprend que la position de ces moyens de mesure 2 sur le corps est fournie à titre indicatif et pourra varier, notamment en fonction des dimensions en hauteur du thermomètre.

Selon l'invention, le thermomètre comprend également des moyens de visualisation 3 placés à l'extrémité opposée du corps par rapport aux moyens de mesure 2 de telle sorte que la lecture de la température puisse être obtenue au voisinage de la surface de l'eau, lorsque la baignoire est remplie jusqu'à un niveau prédéterminé (par exemple 8 cm) pour donner le bain à un enfant.

Pour permettre de solidariser de façon réversible le thermomètre au fond de la baignoire, une ventouse 4 est fixée à la base du corps 1.

Cette ventouse 4 présente une languette 41 facilitant la libération de la ventouse lorsque celle-ci adhère au fond de la baignoire en prenant une position telle que celle représentée en traits pointillés sur la figure 1.

On note que le corps 1 est lesté pour faciliter sa mise en place et son maintien en station debout dans la baignoire.

Selon le présent mode de réalisation, l'indication de la température de l'eau est fournie par un afficheur numérique.

Selon une variante, le thermomètre pourra en outre comprendre des moyens de sécurité, délivrant au moins une information d'alarme de type sonore ou lumineuse, lorsque la température mesurée est inférieure ou supérieure à une valeur de température prédéterminée.

Ainsi, tel que cela apparaît sur la figure 5, le thermomètre porte une diode luminescente 7 permettant de délivrer une information visuelle codée, aisément et rapidement exploitable par l'utilisateur. Par exemple, la diode clignote lentement lorsque la température est comprise entre 38 et 45°, et rapidement si elle est supérieure à 45°.

Selon un autre mode de mise en oeuvre, on peut prévoir plusieurs diodes. À titre d'exemple, la première diode s'allumera en prenant une couleur bleue si l'eau est trop froide, une deuxième diode s'allumera en prenant une couleur rouge si l'eau est trop chaude et une troisième diode, (optionnellement en forme particulière, par exemple de sourire), s'éclairera si l'eau est à bonne température (c'est-à-dire à une température avoisinant la température normale du corps).

De plus, le thermomètre présente un interrupteur 10 de mise sous tension.

Selon le présent mode de réalisation, les moyens de visualisation 3 sont recouverts par une lentille 5 formant loupe. Un tel agencement permet une lecture aisée de la température, y compris lorsque le thermomètre est mouillé ou légèrement recouvert d'eau.

Le bord 7 de la partie supérieure s'étend sensiblement à 13 centimètres de l'extrémité inférieure du thermomètre. Comme cela apparaît sur la figure 4, le corps 1 peut porter des graduations permettant de mesurer le niveau d'eau. Cette graduation comprend notamment une marque à 8 cm, correspondant au niveau d'eau recommandé pour les enfants en bas âge.

À titre indicatif, le thermomètre selon l'invention pourra présenter une hauteur d'environ 133 mm, un diamètre de la partie supérieure d'environ 70 mm et un diamètre de ventouse d'environ 61 mm.

Le corps 1 du thermomètre et la partie supérieure 11 sont réalisés en polypropylène, la lentille 5 en polycarbonate et la ventouse en silicone.

La forme et le lest du thermomètre sont conçus pour que celui-ci puisse flotter lorsqu'il n'est pas solidarisé au fond. Il peut ainsi être utilisé pour le bain d'un enfant plus âgé ou d'un adulte, en prenant toujours la température en profondeur, et non à la surface.

## Revendications

1. Thermomètre pour baignoire comprenant, dans un corps monobloc (1), des moyens de mesure (2) de la température de l'eau et des moyens de visualisation (3) d'une information représentative de ladite température,
**caractérisé en ce que** ledit corps (1) est conçu de façon à tenir sensiblement verticalement, posé sur le fond de ladite baignoire, lesdits moyens de mesure (2) relevant la température au voisinage dudit fond, et lesdits moyens de visualisation (3) étant placés à l'autre extrémité dudit corps (1), de façon qu'ils se trouvent au voisinage de la surface de l'eau et/ou hors de l'eau, lorsque ladite baignoire est remplie sensiblement jusqu'à un niveau d'eau prédéterminé suffisant pour donner le bain à un enfant.

2. Thermomètre pour baignoire selon la revendication 1, **caractérisé en ce qu'**il comprend des moyens pour le solidariser de façon réversible audit fond de la baignoire.

3. Thermomètre pour baignoire selon la revendication 2, **caractérisé en ce que** lesdits moyens de solidarisation comprennent une ventouse (4).

4. Thermomètre pour baignoire selon l'une quelconque des revendications 1 à 3, **caractérisé en ce que** lesdits moyens de visualisation (3) comprennent un afficheur numérique.

5. Thermomètre pour baignoire selon l'une quelconque des revendications 1 à 4, **caractérisé en ce que** lesdits moyens de visualisation (3) comprennent au moins une diode luminescente (7).

6. Thermomètre pour baignoire selon l'une quelconque des revendications 1 à 5, **caractérisé en ce qu'**il comprend des moyens de sécurité, délivrant au moins une information d'alarme lorsque la température mesurée est inférieure et/ou supérieure à au moins une valeur de température prédéterminée.

7. Thermomètre pour baignoire selon la revendication 6, **caractérisé en ce que** ladite information est un signal sonore et/ou un signal lumineux.

8. Thermomètre pour baignoire selon l'une quelconque des revendications 1 à 7, **caractérisé en ce que** lesdits moyens de visualisation sont recouverts par une lentille (5) formant loupe, permettant une lecture même lorsque le thermomètre est mouillé ou légèrement recouvert d'eau.

9. Thermomètre pour baignoire selon l'une quelconque des revendications 1 à 8, **caractérisé en ce qu'**il est conçu de façon à pouvoir flotter.

10. Thermomètre pour baignoire selon la revendication 9, **caractérisé en ce qu'**il est lesté de façon à prendre ladite position sensiblement verticale, lorsqu'il flotte.

11. Thermomètre pour baignoire selon l'une quelconque des revendications des revendications 1 à 10, **caractérisé en ce qu'**il porte au moins un repère et/ou au moins une graduation permettant de mesurer le niveau d'eau.
